(19) Europäisches Patentamt

European Patent Office

Office européen des brevets

(11) **EP 4 657 255 A1**

(12) **EUROPEAN PATENT APPLICATION**

(43) Date of publication:
**03.12.2025 Bulletin 2025/49**

(21) Application number: **24386064.0**

(22) Date of filing: **30.05.2024**

(51) International Patent Classification (IPC):
*G06F 9/50* (2006.01)

(52) Cooperative Patent Classification (CPC):
**G06F 9/5044; G06F 9/5094;** G06F 2209/503

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vodafone Group Services Limited**
**Newbury, Berkshire RG14 2FN (GB)**

(72) Inventors:
• **Law, Alan**
**London W2 6BY (GB)**
• **Patroni, Nikoleta**
**London W2 6BY (GB)**
• **Ahmed, Tanveer**
**London W2 6BY (GB)**
• **Dariol, Vaifro**
**London W2 6BY (GB)**

(74) Representative: **Boult Wade Tennant LLP**
**Salisbury Square House**
**8 Salisbury Square**
**London EC4Y 8AP (GB)**

(54) **A METHOD AND FRAMEWORK FOR MANAGING RESOURCES IN A NETWORK FUNCTION OF AN OPEN RADIO ACCESS NETWORK, A METHOD OF COMPILING A COMPUTER PROGRAM, A COMPUTING DEVICE AND A COMPUTER PROGRAM**

(57) A method of managing resources in a network function of an Open Radio Access Network, Open RAN, is provided. The method comprises dynamically identifying a plurality of hardware resources available to the network function. Each hardware resource supports one or more processing capabilities. The method further comprises facilitating a plurality of application processes by:

dynamically allocating hardware resources from the plurality of hardware resources to the plurality of application processes, based on one or more processing requirements of each of the plurality of application processes and the processing capabilities of each hardware resource; and

communicating instructions and data between each of the plurality of application processes and the hardware resources allocated to the respective application process.

Fig. 3

**Description**

**Field of the invention**

The present invention relates to management of resources in network function deployments of an Open Radio Access Network. In particular, the invention relates to methods of facilitating application processes in network function deployments where hardware resources having particular processing capabilities are available.

**Glossary**

RAN - Radio Access Network
MNO - Mobile Network Operator
GPU - Graphics Processing Unit
O-RAN - Open RAN Alliance
O-DU - Open Distributed Unit
O-CU - Open Central Unit
O-RU - Open Radio Unit
PHY - Physical Layer
MAC - Medium Access Control
RLC - Radio Link Control
PDCP - Packet Data Convergence Protocol
RRC - Radio Resource Control
SOAP - Service Data Adaptation Protocol
OS - Operating System
API - Application Programming Interface
SMO - Service Management and Orchestration
DMS - Deployment Management Services
NF - Network Function
IMS - Infrastructure Management Services
vRAN - virtualized RAN
CPU - Central Processing Unit
NAS - Non-Access Stratum
LLC - Logical Link Control
SNDCP - Sub Network Dependent Convergence Protocol
PCIe - Peripheral Component Interconnect Express
OCP - Open Core Protocol
RIC - RAN Intelligent Controller
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access

FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications (2G)
GSMA - GSM Association
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System (3G)
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

## Background

Open RAN is a technology architecture concept directed to decoupling the hardware and software components of a Radio Access Network (RAN). It is a RAN that includes open interoperable interfaces and virtualization. In prior art (Non-Open) RANs, the hardware and software components are typically proprietary. Non-Open RAN equipment is generally obtained from a single vendor to ensure seamless functionality, security, and efficiency. In contrast, Open RAN introduces open standards for both hardware and software, enabling interoperability among various network elements. For Mobile Network Operators (MNOs), Open RAN holds strategic importance as it promotes vendor diversity, allowing the integration of new suppliers and enhancing supply chain resilience. It also brings energy efficiency gains by enabling targeted improvements in specific areas of the RAN. Furthermore, Open RAN facilitates innovation and competition by providing a more dynamic and efficient network environment. Additionally, it provides an opportunity for collaboration with specialist suppliers and facilitates resource optimization by allowing upgrades to software, without necessitating hardware replacements. Open RAN is important in the long-term network innovation strategy of MNOs, offering energy efficiency, supply chain diversification, resilience enhancement, and facilitating innovation and competition.

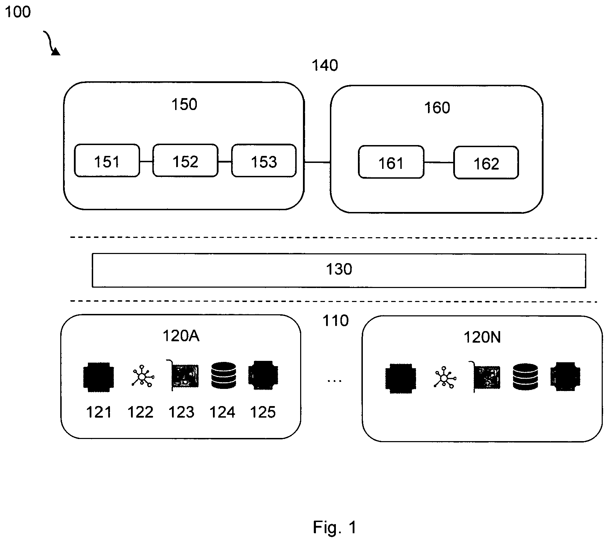

Fig. 1 illustrates some of the elements of an example Open RAN system 100, which is implemented as a cloud computing platform (O-Cloud). The system 100 may be described with reference to different hardware and software layers of the platform.

At the O-Cloud Node layer 110, the system comprises one or more physical infrastructure nodes 120A, 120N that meet O-RAN requirements. Each physical infrastructure node 120A comprises computing 121, networking 122, GPU 123, and storage 124 components, alongside acceleration technologies 125 for RAN operations (such as forward error correction and other computationally intensive operations that are offloaded to dedicated hardware). Each physical infrastructure node 120A, 120N is configured to host the relevant O-RAN network functions 150, 160, which are implemented at the Open RAN application layer 140. The network functions 150, 160 implemented at the Open RAN application layer 140 may include O-CU 160, O-DU 150, and O-RU.

The O-CU, O-DU and O-RU network function deployments comprise functional elements for processing different protocols in the RAN protocol stack. The O-DU 150 comprises:

- a High-PHY component 151 to perform the scrambling, modulation, layer mapping, precoding, resource element mapping, and I/O compression elements of the PHY layer;
- a MAC component 152; and
- a RLC component 153.

The O-CU comprises:

- a PDCP component 161; and
- a RRC/SDAP component 162.

The O-DU 150 may further comprise an Open RAN fronthaul interface to connect the O-DU to one or multiple O-RUs.

At the O-Cloud hypervisor or containers / OS layer 130, there exists a collection of cloud functions to enable the Open RAN applications 150, 160 to run on the one or more O-Cloud hardware nodes 120A. The cloud functions may comprise supporting software components, such as an operating system, Containers (stand-alone executable software packages), a Container Orchestration Platforms (such as Kubernetes), a container runtime, and the like. The cloud functions may also include the corresponding management and orchestration functions.

The O-Cloud serves as a fundamental component for facilitating cloud computing capabilities within the context of RAN network functions. It comprises both hardware and software elements. In particular, its software exposes open APIs, fostering interoperability and flexibility across various vendor solutions. With a decoupled architecture, the O-Cloud allows for sourcing hardware from different vendors, promoting neutrality and flexibility in hardware selection. It supports Service Management and Orchestration (SMO), enabling homing decisions and selecting Deployment Management Services (DMS) for Network Function (NF) Deployments. The DMS handles workload placement, lifecycle management, and resource allocation within O-Cloud Node Clusters, while Infrastructure Management Services (IMS) ensure the infrastructure's availability, reliability, and performance. Moreover, the O-Cloud offers automation capabilities, enhancing efficiency and reducing manual intervention, ultimately supporting efficient resource utilization and scalability for RAN network functions in a cloud-native environment.

US2023318904A1 describes cross-platform programmable network communication in a Radio Access Network. However, this document does not address the issue of efficiently allocating the available hardware resources to the network function applications. The present disclosure aims to address this issue.

## Summary

The present disclosure provides a framework for managing resources and facilitating application processes in an Open Radio Access Network.

A method of managing resources in a network function of an Open Radio Access Network, Open RAN, is provided. The method comprises dynamically identifying a plurality of hardware resources available to the network function. Each hardware resource supports one or more processing capabilities. The method further comprises facilitating a plurality of application processes by:

dynamically allocating hardware resources from the plurality of hardware resources to the plurality of application processes, based on one or more processing requirements of each of the plurality of application processes and the processing capabilities of each hardware resource; and
communicating instructions and data between each of the plurality of application processes and the hardware resources allocated to the respective application process.

As described above, US2023318904A1 describes cross-platform programmable network communication in a Radio Access Network. While this document focusses on system optimization and automation, it does not provide a complete framework for dynamically identifying hardware resources, dynamically allocating resources to application processes and communicating between the application processes and the hardware resources.

By discovering hardware and facilitating application processes in the manner described, the proposed method may allow application processes to be executed by the network independently of the available hardware resources. Therefore, computer programs to implement the functionality of the network functions may be provided by any application vendor(s), may be written in a hardware agnostic manner, and may be inter-operable across different platforms. Likewise, hardware resources may be provisioned to the cloud platform and may be used to facilitate a range of different application processes, from different vendors and for different network functions.

By communicating instructions between the application processes and the allocated hardware resources, the proposed methods provide a framework for a more open and disaggregated system in which the software and hardware elements may be provided by different vendors. In other words, software may be developed independently of the underlying hardware.

This provides a more flexible environment in which individual components of the network (hardware and/or software) may be universally interoperable and may be replaced/updated independently of each other. This may enable individual components of the network to be swapped for more efficient versions, which may improve the overall efficiency of the network. This may also encourage innovation in individual components (since the network is no longer tied to a particular vendor).

In the context of the method described above, managing "resources" may refer to managing processing resources (hardware), rather than radio resources.

In the context of the present disclosure, actions that are performed "dynamically" may be interpreted as being performed at runtime. In contrast, prior art Open RAN systems include static lists of hardware resources that are preconfigured and not determined at runtime.

Multiple application processes can share the same hardware resources. Therefore, dynamic hardware discovery may enable hardware sharing and improve efficiency.

Dynamic discovery and allocation of hardware may also enable suitable hardware to be provisioned for the specific environment (e.g., location) of the network functions. For example, a network function serving a rural environment may have different requirements to a network function serving an urban environment. The proposed methods enable the Open RAN to allocate the resources dynamically (i.e., at runtime), so that the requirements of the applications may be already known and can be met automatically. This may improve the performance and efficiency of the network functions.

Dynamic discovery and allocation of hardware based on the processing requirements of the application processes may also enable the network to respond to changing requirements of the application processes. For example, if the radio conditions change then different hardware may be more suitable for meeting the needs of the network functions.

The plurality of application processes may comprise one or more OpenRAN applications.

The plurality of applications may further comprise one or more virtualized RAN, vRAN, applications and/or one or more virtual RAN applications.

Dynamically identifying the plurality of hardware resources may comprise discovering the plurality of hardware resources and querying each of the hardware resources to determine the respective processing capabilities of each hardware resource.

The plurality of hardware resources may comprise one or more:

RAN processing units;
compute kernels;
memory units;
Central Processing Units, CPUs;
CPU cores;
Digital Signal Processors, DSPs;
Field Programmable Gate Arrays, FGPAs;
Application-Specific-Integrated-Circuits, ASICs;
Graphics Processing Units, GPUs; and/or
accelerators.

As noted above, the "hardware resources" may comprise processing elements that are abstracted from the underlying hardware, such as RAN processing units and compute kernels. These processing elements may be provided by an underlying cloud platform. The way in which these resources are provided may be independent of the application running on the network function. For example, compute kernels for the cloud platform may be written independently of the applications.

The memory units may be silicon memory units. The other listed hardware resources may interact with the memory units, which may include CPU and system memory.

The processing capabilities may comprise one or more of:

an instruction set of the hardware resource;
signal processing capabilities of the of the hardware resource;
packet processing capabilities of the of the hardware resource;
one or more communications protocols for which processing capabilities are supported; and
one or more technology standards for which processing capabilities are supported.

The one or more communications protocols for which processing capabilities are supported may include various components of the 4G and 5G protocol stacks for the RAN, such as:

NAS;
RRC;
SOAP;
PDCP;
RLC;
MAC; and
PHY.

The one or more communications protocols for which processing capabilities are supported may further include components of other protocol stacks, such as:

LLC; and
SNDCP.

The one or more technology standards may include 3GPP standards, such as:

GSM;
GPRS;
EDGE;
UMTS;
UTRA;
CDMA2000;
LTE;
LTE-A;
E-UMTS;
E-UTRA;
NR; and
6G and other forthcoming technology standards.

The one or more technology standards may further include non-3GPP technology standards, such as:

Wi-Fi; and
WiMAX.

The method may further comprise receiving, from each of the plurality of application processes, a request for hardware resources. The request may comprise an indication of the processing requirements of the respective application process.

The method may further comprise dynamically configuring hardware resources from the plurality of hardware resources, based on the one or more processing capabilities of the respective hardware resource and the one or more processing requirements of one or more application processes to which the hardware resource has been allocated.

Each hardware resource may support one or more power management capabilities. The method may further comprise receiving, from each of the plurality of application processes, power management instructions. The method may further comprise implementing the power management instructions by controlling one or more of the hardware resources allocated to the respective application process, based on the power management capabilities of the respective hardware resource, to:

operate in a power mode selected from a plurality of power modes defined by the power management capabilities of the hardware resource;
perform frequency scaling; and/or
perform voltage regulation.

Dynamically identifying the plurality of hardware resources may further comprise querying each of the hardware resources to determine the respective power management capabilities of each hardware resource.

Hardware discovery may notify the application of the power management capabilities are available for each hardware resource and enable the application to perform its own power management. Alternatively, power management policies may be set by another entity in the cloud platform, such as a Service Management and Orchestration framework. In either case, the framework may be responsible for implementing the power management by configuring the hardware resources.

The method may further comprise dynamically evaluating one or more power consumption and performance metrics. The method may further comprise dynamically adjusting allocation of hardware resources to the plurality of application processes to implement the power management instructions.

In other words, implementing the power management instructions may further comprise dynamically evaluating one or more power consumption and performance metrics and dynamically adjusting allocation of hardware resources to the plurality of application processes. In this way, the framework may evaluate power consumption and performance to achieve a compromise. This may also allow the network functions to flexibly reconfigure the hardware to meet performance requirements. This may improve overall efficiency and/or performance.

The method may further comprise configuring one or more compute kernels to improve performance and/or reduce energy consumption.

The method may further comprise defining an application-specific interface between each of the plurality of application processes and the hardware resources allocated to the respective application process. Communicating instructions and data between the application process and the allocated hardware resources may comprise communicating the instructions and data via the application-specific interface.

Communicating instructions and data via the application-specific interface may comprise:

communicating instructions and data with the application process via the application-specific interface;
translating the instructions and data, based on the application-specific interface defined for the application process; and
communicating instructions and data with the plurality of hardware resources via one or more underlying physical interfaces.

In some examples, underlying hardware resources (e.g., compute kernels) may operate with different address spaces. By translating the instructions and data, the proposed methods may facilitate execution of code on the underlying resources, independently of the address spaces used by each component of the system.

The one or more underlying physical interfaces may comprise one or more of:

Peripheral Component Interconnect Express, PCIe;
Open Core Protocol, OCP; and
ethernet.

In some examples, OCP may include the use of PCIe as an internal connection standard. Nevertheless, the physical form factor and connector may follow the OCP specification.

The proposed framework may facilitate a programmatic method for provisioning an interface between the hardware and software components and perform an orchestration role to mediate between them. In this way, the proposed framework may be used to flexibly manage different types of interfaces between hardware and software elements.

A framework for managing resources in a network function of an Open Radio Access Network, Open RAN, is also provided. The framework comprises a software-defined RAN controller, SDRC, configured to dynamically identify a plurality of hardware resources available to the network function, wherein each hardware resource supports one or more processing capabilities. The SDRC is further configured to dynamically allocate hardware resources from the plurality of hardware resources to a plurality of application processes, based on one or more processing requirements of each of the plurality of application processes and the processing capabilities of each hardware resource. The framework further comprises a RAN inter-process communication framework, RAN-IPC, configured to communicate instructions and data between each of the plurality of application processes and the hardware resources allocated to the respective application process.

The framework may further comprise a RAN programming language defining a plurality of functions comprising signal and packet processing functions for a plurality of communications protocols and/or technology standards.

For example, the RAN programming language may comprise signal and packet processing operations for 5G.

The RAN programming language may further comprise cryptography processing operations for encoding and decoding data.

The framework may further comprise a RAN compiler configured to receive instructions in accordance with the RAN programming language and provide instructions to control each of the plurality of hardware resources, based on the processing capabilities of the respective hardware resource.

The framework may further comprise a Hardware Abstraction Layer, HAL, configured to communicate instructions and data between the SDRC and the plurality of hardware resources via one or more underlying physical interfaces.

In prior art systems, hardware abstraction is fixed. For example, some systems provide a BaseBand driver mechanism to hide the underlying hardware. Moving from one hardware abstraction mechanism to another would be an extremely complex task in such systems. Therefore, these elements are rarely changed and can be a source of inefficiencies and limit flexibility of interoperability between hardware and software. In contrast, the proposed framework provide a highly programmable, more dynamic and transparent system in which individual elements may be introduced, substituted and/or removed.

A computer program comprising instructions that, when executed on a processor, cause the processor to perform any of the methods described above is also provided.

A method of compiling a computer program comprising instructions executable by a network function of an Open Radio Access Network, Open RAN, is also provided. The method comprises identifying a plurality of hardware resources available to the network function, wherein each hardware resource supports one or more processing capabilities. The method further comprises parsing source code, wherein the source code comprises instructions written in a human-readable programming language. The method further comprises generating machine code for execution by one or more of the plurality hardware resources. Executing the machine code causes the respective hardware resource to carry out the instructions. The machine code is based on the processing capabilities of the hardware resource.

The proposed method may enable the computer program to be compiled independently of the underlying hardware on which it will eventually be executed (e.g., the CPU). Moreover, the source code may be written without committing to running the computer program on any particular hardware.

Prior art compilers produce software applications that use instructions specific to the CPU on which the program will be run. These computer programs are difficult to interoperate between platforms.

Advantageously, the proposed methods may exploit the benefits of the available hardware, while making the application agnostic to the underlying hardware.

The computer program may comprise instructions executable by a processing node, such as a network function of an Open Radio Access Network.

The source code may comprise one or more source code files.

The source code may be written in a RAN Programming Language, which comprises functions that are specific to Open RAN. Alternatively, the source code may be written in a well-known programming language, such as C++.

The computer program may be an OpenRAN application.

In some examples, the computer program may be a virtualized RAN, vRAN, application or a virtual RAN application.

Generating machine code for execution by one or more of the plurality of hardware resources may comprise generating a different version of machine code for each of the hardware resources, based on the processing capabilities of the hardware resource.

The processing capabilities of a first hardware resource of the plurality of hardware resources may be different to the processing capabilities of a second hardware resource of the plurality of hardware resources.

In other words, each hardware resource supports one or more processing capabilities that are different between hardware resources.

The processing capabilities of the hardware resources may be tailored to specific functions. When the computer program is executed by a network function, one or more application processes may be instigated. The one or more hardware resources may be allocated to the one or more application processes based on the requirements of the respective application process and the capabilities of the hardware resource.

The plurality of hardware resources may comprise one or more:

RAN processing units;
compute kernels;
memory units;
Central Processing Units, CPUs;
CPU cores;
Digital Signal Processors, DSPs;
Field Programmable Gate Arrays, FGPAs;
Application-Specific-Integrated-Circuits, ASICs;
Graphics Processing Units, GPUs; and/or
accelerators.

The processing capabilities may comprise one or more of:

an instruction set of the hardware resource;
signal processing capabilities of the of the hardware resource;

packet processing capabilities of the of the hardware resource;
one or more communications protocols for which processing capabilities are supported; and
one or more technology standards for which processing capabilities are supported.

Each hardware resource may support one or more power management capabilities. Executing the machine code may cause the respective hardware resource to operate in a power mode selected from a plurality of power modes defined by the power management capabilities of the hardware resource.

The one or more hardware resources may support frequency scaling. Executing the machine code may cause the respective hardware resource to adjust a CPU frequency of the hardware resource based on a workload of the hardware resource.

For example, if the CPU is busy, the frequency may be increased to increase the work rate of the CPU. If workload is low, the frequency may be reduced to increase efficiency and stability.

In prior art methods, frequency scaling is very specific to the underlying hardware and the code is not functionally portable between different CPU types. In contrast, the proposed methods generate machine code based on the processing capabilities of the underlying hardware resource (i.e., it can be tailored to any hardware). Moreover, the proposed invention may provide different versions of the executable code for different hardware requirements. In this way, frequency scaling may be performed on a variety of hardware without the application programmer having to know in advance what hardware will be available or write different versions of the code to account for the different possibilities. The compiler will take care of this.

Executing the machine code may cause the respective hardware resource to adjust a supply voltage of the hardware resource based on the CPU frequency of the hardware resource.

Power mode selection, frequency scaling and/or voltage regulation may be implemented with a hysteresis mechanism to inhibit changes within a threshold period following a previous change.

The method may further comprise defining an application-specific interface between the computer program executable by the network function and the plurality of hardware resources. The computer program may comprise rules for translating instructions and data communicated from the network function via the application-specific interface to the plurality of hardware resources via one or more underlying physical interfaces.

The one or more underlying physical interfaces may comprise one or more of:

Peripheral Component Interconnect Express, PCIe;
Open Core Protocol, OCP; and
ethernet.

The computer program may be configured to run in a cloud environment or on a physical server. The computer program may be run on a containerised operating system or a non-containerised operating system.

A computing device configured to perform any of the methods described above is also provided.

A computer program (e.g., a compiler) comprising instructions that, when executed on a processor, cause the processor to perform any of the methods described above is also provided.

**Brief description of the drawings**

Fig. 1 illustrates an example cloud platform.

Fig. 2 illustrates the differences between Single (Non-Open) RAN and Open RAN.
The invention will be described with reference to the non-limiting examples illustrated in the following Figures.

Fig. 3 illustrates an overview of the RAN abstraction framework with layered components.

Fig. 4 illustrates the process flow for the interface definitions.

**Detailed description**

Prior to Open RAN, mobile networks were built by a small number of vendors with tightly coupled hardware and software. Interoperability between equipment from different vendors was restricted and this arrangement resulted in limited flexibility and innovation. It is an aim of Open RAN to improve the traditional model by decoupling hardware and software components. This enables greater flexibility, innovation, and cost-effectiveness in building and operating mobile networks.

As described above, the Open RAN system decouples hardware and software in the RAN network and allows hardware and software components to be provisioned separately. In order to do so, new standards for interactions between the hardware and software components of the Open RAN system have been provided by the Open RAN Alliance (the term "O-RAN" generally refers to standards specified by the Open RAN Alliance).

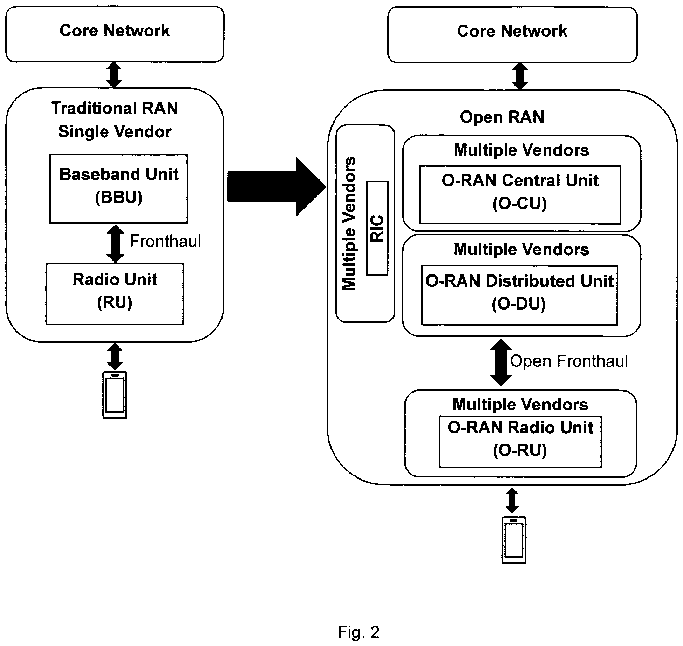

Fig. 2 illustrates the differences between Single (Non-Open) RAN and Open RAN. By moving from a Single RAN to an Open RAN, the following benefits may be achieved:

Disaggregation;
Decoupling HW from SW;
Open Ecosystem;
Open Interfaces; and
Intelligent Management.

Open RAN enables interoperability for hardware and software elements provided by different suppliers. By doing so, Open RAN also provides resilience for the MNO by promoting supplier diversity in the network. If elements from a specific supplier cease to function correctly or need to be removed permanently or temporarily (e.g., due to security or performance requirements), elements from another supplier may be relied upon instead, without major disruption to the network.

Open RAN also offers potential energy efficiency improvement, for example through flexible provisioning of hardware to meet network requirements.

Open RAN enables Functional Block Separation where the baseband processing functions are separated into distinct blocks, allowing various vendors to contribute and innovate. To achieve true interoperability and innovation, this however requires solutions from different vendors to work together seamlessly. Ensuring seamless interoperability between hardware and software components across competing vendors is crucial for the success of Open RAN. The disaggregation of RAN functions into software-based components that can be hosted on different processor architectures introduces interoperability challenges while managing and orchestrating these functions.

The cloud platform, which is sometimes referred to as the "O-Cloud", serves as a fundamental component of the Open RAN system. The cloud platform comprises hardware and software components. The hardware components of the cloud platform include physical infrastructure nodes arranged in one or more node clusters, which are referred to as "server nodes". These provide the hardware resources that are needed to support the network function deployments (e.g., O-RU, O-DU and O-CU), which are implemented in software applications running on the cloud platform hardware. The software applications are referred to in this document as "client nodes".

The network function deployments are sometimes referred to as "managed elements" or "logical nodes" in related literature. "Logical nodes" are not to be confused with the physical infrastructure nodes of the cloud platform (server nodes). In this disclosure, the software applications that implement the network functions are referred to as "client nodes". The physical infrastructure nodes of the cloud platform (server nodes) comprise the physical hardware resources required to support the network function deployments, while the software applications (client nodes) define the functionality of the network function deployments. Neither of these are to be confused with a 3GPP base station, which is referred to as a "Node B".

To facilitate interoperability and create an environment for competition and innovation, one characteristic of virtualized and open RAN is that multiple hardware and software vendors can coexist within an operator's RAN domain. Defining standards and interfaces that enable effective innovations from the different competing vendors with their ensuing solutions remains an ongoing challenge for developers of Open RAN standards.

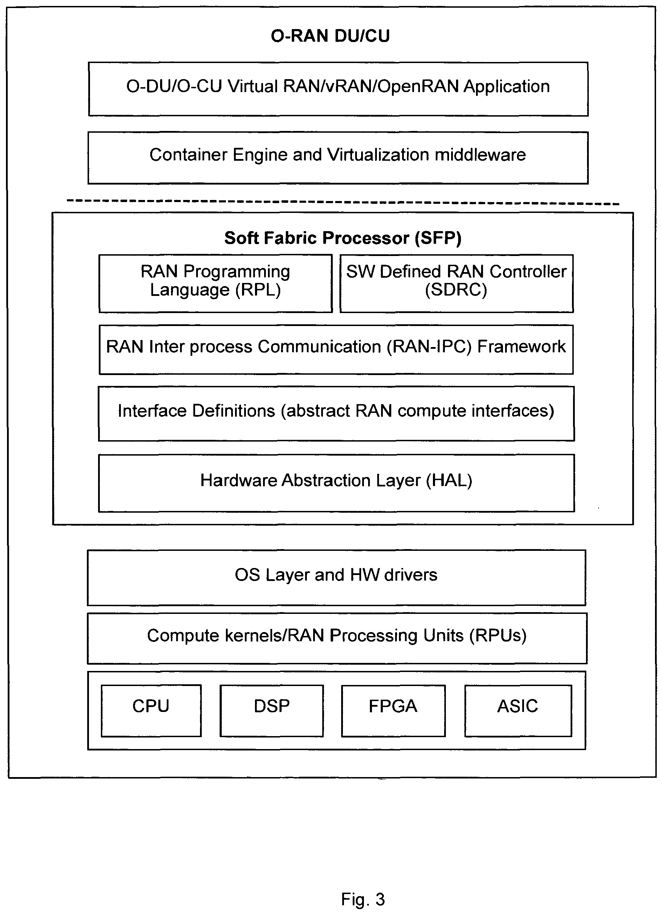

To ensure Open RAN applications in the O-DU, O-CU and O-RU platforms can make best use of the underlying resources of the processing hardware fabric, an abstraction framework is provided that enables both the application development and RAN component development from any vendor to become independent of the system hardware fabric. The overview of the RAN abstraction framework with layered components is illustrated in Fig. 3.

Fig. 3 illustrates an O-DU or O-CU vRAN Application running on an O-RAN DU or CU. Nevertheless, the O-DU or O-CU abstraction framework could equally apply to an O-RU application that may be built on bare metal (without a container engine).

The RPL, SDRC, RAN-IPC Framework and Interface Definitions provide new layers that together form the Soft Fabric Processor according to the present disclosure.

The Soft Fabric Processor also comprises a Hardware Abstraction Layer in some examples. A Hardware Abstraction Layer is provided in prior art O-RAN DU and CU arrangements and there are ongoing developments and discussions around the HAL in the O-RAN community. In some embodiments, the HAL of the Soft Fabric Processor may complement current ideas. Alternatively, the HAL of the Soft Fabric Processor in other embodiments may introduce a new conceptual model.

The main components of the Soft Fabric Processor (SFP) are described separately below. These are specific examples and are not intended to limit the scope of the present invention, which his defined in the appended claims.

*RAN Programming Language (RPL)*

A high-level RAN Programming Language (RPL) provides a RAN specific syntax for expressing O-DU functionalities. This allows developers to focus on the O-DU processing logic without requiring knowledge of low-level hardware details. The following RAN Programming Language (RPL) framework provides abstraction of the 5G vRAN functions, enabling dynamic hardware discovery and configuration of discrete RAN Processing Units (RPUs)/compute kernels.

The RPL framework provides a simplified framework for development of highly flexible vRAN applications by providing a high-level, RAN-specific approach to express O-DU vRAN signal and packet processing functionalities.

The RPL framework enables dynamic configuration and utilization of available signal processing and hardware resources (e.g., accelerators and dedicated processing units) for optimal performance.

With runtime discovery of the processing resources, the RPL framework provides an effective framework for exploiting the signal processing and hardware capabilities at runtime to achieve optimal performance and energy efficiency.

The RPL framework comprises an RPL Language. The RPL Language is a core component with keywords, operators, and constructs designed for representing vRAN functionalities and interacting with the RAN signal/packet processing and hardware resources.

The RPL framework also comprises an RPL Compiler (SDK toolkit). The RPL Compiler forms part of the RPL SDK toolkit and may be used to generate actionable behavioural output as runtime code. This component translates the RPL code into executable code for the target hardware platform.

*Software Defined RAN Controller (SDRC)*

The SDRC runtime system performs dynamic discovery of the available processing units, detecting available processing units and their capabilities such as the supported services, methods/operations and performance characteristics.

The SDRC runtime system performs resource management by requesting and managing hardware resources for specific processing tasks.

The SDRC runtime system performs configuration/reconfiguration of the processing units with parameters based on the discovery information and vRAN application specific requirements communicated via the RPL framework.

The SDRC runtime system enables an application to perform platform independent power management operations to provide power saving modes, frequency scaling and voltage regulation. Platform independent abstraction of the power management policies and interfaces may enable the O-RAN compute platform (DU/O-CU/O-RU) to optimize energy efficiency across different CPU architectures while balancing performance and power consumption.

*RAN Inter-Process Communication (RAN-IPC) Framework*

RAN-IPC Implements an "Ultra-Fast" RAN Inter-Process Communication (RAN-IPC) framework enabling communication mechanism for carrying messages and data between application and components and compute kernels via the defined interfaces with minimal latencies.

A Remote Procedure Call (RPC) approach is proposed to support the RAN-IPC framework. An RPC framework enables communication between the different application components using the abstract interfaces instantiated via the Interface Definitions. This allows for distributed processing and efficient utilization of RAN compute resources that are location independent (i.e., whether hosted on the native application processor or elsewhere on a different hardware system with its own address space).

The RPC middleware layer provides the communication mechanism between the O-RAN compute kernels providing the services (server nodes) and the applications requesting the services (client nodes). It handles functions such as establishing connections, serializing and deserializing data (where required), and managing seamless method invocations. The RPC middleware abstracts away the underlying transport, allowing the RPC framework to be independent of the specific transport communication protocol.

The proposed RPC middleware alongside the interface Definition Language (IDL) framework may enable RPL (RAN Programming Language) operations or commands towards different compute kernels (e.g., signal processing functions) by providing a standardized way to define seamless interfaces and facilitating communication between the RPL application environment and the compute kernels.

In the context of an O-RAN compute platform of the O-DU/O-CU/O-RU, RPL operations/commands would typically be specified in an IDL file to define the interfaces and methods that the system may use for communication and control. This would allow for a standardized way of invoking these commands across different implementations and ensure that the system components can interoperate effectively according to the O-RAN standards. The IDL acts as a contract that specifies the structure of the data and the operations available, which can be used to generate code for different platforms and languages.

The RPC layer may be capable of supporting different transport protocols for communication between the O-RAN applications of the client nodes and the compute kernels of the server nodes. The RPC framework may be optimized for speed and latency.

The IDL based approach enables the RPC framework to support different communication mechanisms. This may include specialized protocols optimized for low-latency communication in an O-RAN environment for compute kernels/hardware acceleration functions. For PCIe based hardware platforms, these protocols may leverage the low latency and bandwidth of PCIe while implementing functionalities specific to the compute kernel/acceleration needs. For compute kernels located in the same address space of the O-DU/O-CU/O-RU native processor platform, the RPC communication handling is performed using structures which are stored in shared memory. These structures may represent the communication channels between communication entities of the server/client nodes.

To achieve platform independence, the RPC layer is built alongside the IDL framework implemented using language and platform-neutral technologies while the framework abstracts away hardware-specific details, allowing it to run on different processor architectures seamlessly.

While facilitating the establishment and management of the RPC connections, including connection lifecycle management and control of the RPC nodes, the RPC framework may enable brokerless communication with a direct connection between the client and server nodes of the RPC system. The lightweight framework with brokerless communication may facilitate efficient and ultra-fast communication with minimal overhead for a direct connection without intermediaries.

To support the dynamic nature of radio networks and the diverse requirements of RAN signal processing functions, the RPC framework may support dynamic configuration of the compute kernels/RPUs. This includes the ability to dynamically add or remove processing nodes, reconfigure RAN signal processing pipelines, and adapt to changes in network conditions or traffic patterns.

In the context of an O-RAN compute platform of the O-DU/O-CU/O-RU, the proposed IDL-based RPC framework alongside the RPL environment provides a holistic approach for an effective abstraction of the O-RAN compute kernels and applications by serving as a standardized interface for defining the procedures and data structures that are used for communication between different components of the O-RAN system.

The holistic approach described provides a number of advantages over prior art systems. One such advantage is standardization. IDL files may define the interfaces and methods in a standardized format, ensuring consistency across different implementations and vendors.

Another advantage is abstraction. By abstracting the underlying compute kernels/RAN Processing Units (RPUs) and the application layers, developers can work with a simplified model of the system, focusing on the higher-level operations without worrying about the low-level details.

A third advantage is interoperability. A common IDL-based RPC framework would facilitate interoperability between RAN components (compute kernels and applications) developed by different O-RAN vendors, while ensuring they would all adhere to the same interface specifications. This may enable a much wider competition landscape with rapid on-boarding of new features and designs in the O-RAN ecosystem.

A fourth advantage is automation. Soft Processor Framework (SFP) SDK/tools can automatically generate stubs and skeletons for various platforms and programming languages from the IDL files, speeding up the development process.

Another advantage is flexibility. The RAN Programming Language (RPL) operations/commands specified in the IDL as methods would allow for flexible and dynamic discovery, on-boarding, and control of the compute kernels/RPUs and applications, enabling the system to adapt more readily to new requirements or changes in the environment.

*Interface Definitions*

Interface Definitions programmatically provide the abstract interfaces via HAL for different compute kernels forming part of the hardware components such as CPU, DSP, FPGA and ASIC

Interface Definitions may enable abstract interfaces over different underlying physical interfaces, native on the application processor system, PCIe, Ethernet, etc.

Development of the HAL implementation for each compute component may enable the translation of high-level commands from the application into compute kernel-specific instructions.

To accomplish standardized abstract interfaces between components and applications of an O-RAN compute platform (O-DU/O-CU/O-RU), an Interface Definition Language (IDL) framework is proposed that enables platform/processor/operating system (OS) and language implementation independent communication between the O-RAN components and applications.

The descriptive language of the IDL framework describes the required data types and interfaces and captures their attributes, operation signatures and exceptions. The actual O-RAN compute algorithmic implementation of operations, however, is not required. In the case of O-DU for instance, the algorithmic implementation is provided by the compute kernels/RAN Processing Units (RPUs) of the server nodes serving the request submitted by the O-DU applications of the client nodes.

The IDL framework provides the basis for platform/processor/OS and language implementation independence in the O-RAN compute platform environment. The framework includes an IDL compiler to generate language-specific stubs (client nodes of the O-DU/O-CU/O-RU applications) and skeletons (server nodes providing the O-DU/O-CU/O-RU compute kernels). These stubs and skeletons serve as proxies on the client and server sides, respectively, allowing for seamless communication between the two ends.

The IDL framework may enable seamless method invocations described in the Remote Procedure Call communication mechanism. For an O-RAN O-DU/O-CU/O-RU application, this IDL specification includes methods for configuring and invoking compute kernels (e.g., 5G signal processing functions and other compute kernels and packet processing entities). The seamless method invocation means that this operation can be performed in a location independent manner, i.e., irrespective of whether the method is located locally on the native processor hardware in the same address space or on a different hardware platform, the application is unaware of the location.

The definition of the IDL based abstract interfaces that are independent of the underlying hardware platform and OS may ensure that the interfaces remain consistent regardless of the deployment environment. By using an IDL, developers can focus on the logic of their applications without worrying about the underlying communication protocols, as the IDL handles the translation of method calls and data structures across the communication interface.

*Overall Interface Definitions and RPC Process Flow*

In the context of an O-RAN ecosystem, the proposed framework enables application vendors to develop applications that may use the services provided by the compute kernels/RPUs (or potentially other applications). The service-requesting application needs to use a stub of the IDL provided with the compute kernel/RPU. By using the IDL file and the code generator, the developer of the application can generate the interface stub. The generated code of the interface stub allows the application to connect to the interface skeleton via the RPC framework. Once connected, the application can perform RPC calls on the servicing compute/kernel/RPU via the interface. The IDL and code generation is done on the host, whereas the applications are executed on the target O-DU/O-CU/O-RU compute platform.

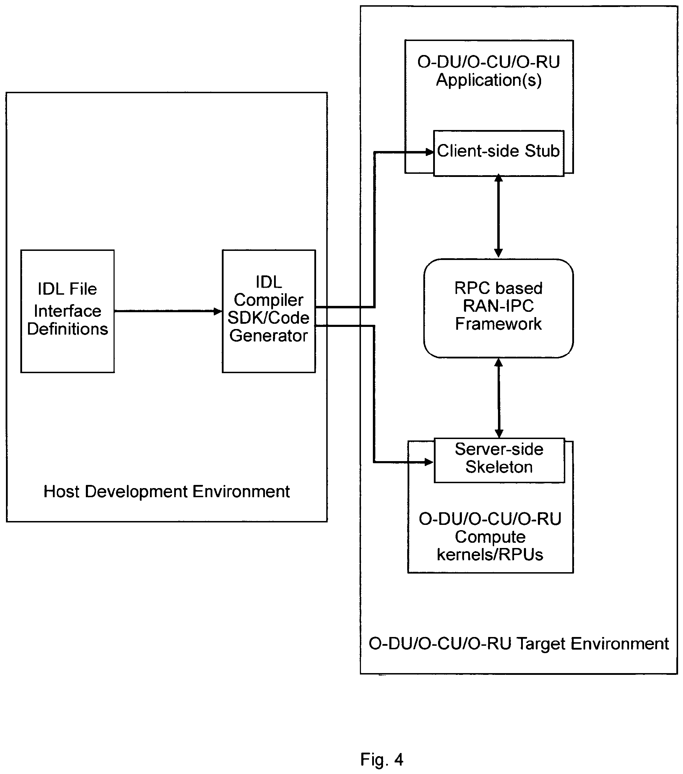

Fig. 4 illustrates the process flow for the interface definitions. The IDK Compiler SDK/ Code Generator is a component of the Soft Fabric Processor (SFP) SDK. The RPC based RAN-IPC Framework is also a component of the SFP SDK. The IDL File comprising the Interface definitions is provided by the Application(s) vendor(s). The O-DU/O-CU/O-RU Application(s) is/are also provided by the Application(s) vendor(s). The O-DU/O-CU/O-RD Compute kernels/RPUs are provided by the compute kernel(s) vendor(s). Based on the IDL File and interface Definitions, the IDL Compiler SDK is configured to generate the client-side stub and the server-side skeleton. The client-side stub and the server-side skeleton components are therefore auto generated.

*Hardware Abstraction Layer (HAL)*

The HAL layer forms part of the overall SFP framework that provides an interface between the SFP components, including the RPL component, and the underlying hardware platform.

*C/C++ Language/Compiler Enhanced Operations*

C/C++ Language/Compiler Enhanced Operations provide a high-level interface to the underlying CPU instructions, allowing developers to write hardware platform independent code while still leveraging specific optimizations of the underlying CPU hardware. They can form part of a more abstract level application programming framework to express operations that have efficient implementations on different architectures. Compiler intrinsics for instance can provide a standardized interface for accessing these features, which can improve code portability across different CPU platforms and compilers. By abstracting low-level CPU instructions into such abstract level operations, O-RAN components can achieve performance across different CPU architectures without direct dependency on assembly-level programming.

Some specific examples of abstract level operations that are applicable for vRAN applications are described below.

The Compiler Enhanced Operations may comprise vRAN workload based dynamic CPU frequency scaling with hysteresis. This may introduce a hysteresis mechanism to avoid frequent frequency switches. If the vRAN workload exceeds an upper threshold or falls below a lower threshold, the frequency may be adjusted to a new value given by the following formula:

$$Min\_Frequency + (vRAN\ workload * (Max\_Frequency - Min\_Frequency))$$

The new frequency may be rounded to nearest frequency step value of the target CPU. The "vRAN workload" is a CPU core occupancy normalized between 0 and 1.

The Compiler Enhanced operations may comprise abstraction of atomic operation to achieve consistent behaviour across different CPU architectures. The atomic functions to provide programmable priority levels to enable O-DU to manage its real time tasks of varying criticalities with their corresponding resources more efficiently. The abstract atomic operation may be used for thread synchronization and concurrency control with abstraction of synchronization constructs to ensure portability and performance on different CPU architectures.

The Compiler Enhanced Operations may comprise a random number generator with configurable entropy levels This platform independent function may provide a secure source of random numbers with adjustable entropy levels (measure of randomness) important for generating highly randomized keys for cryptographic algorithms used in O-DU vRAN applications.

The Compiler Enhanced Operations may comprise RAN workload encryption functions that provides a generic interface for the 3GPP mandated encryption algorithms. The generic behaviour may be mapped to CPU-specific instructions by the compiler (and optimised for the particular CPU).

The Compiler Enhanced Operations may comprise matrix operations with a generic interface to support different processor architectures. The generic behaviour is mapped to the CPU-specific matrix instructions for the underlying CPU (and optimised for the particular CPU). The matrix operations are used in vRAN application to perform key functions such as Channel Estimation, Equalization, Beamforming, Precoding and Combining amongst others.

The Compiler Enhanced Operations may comprise a vRAN packet processing function with a generic interface to abstract network protocol processing operations including packet parsing, checksum calculation and header management/handling supported with a common interface independent of the underlying CPU architecture.

Overall, the proposed soft fabric processor may provide significant benefits in several key areas, which are described below.

The proposed soft fabric processor may provide performance benefits. The effective abstraction of the processing components may enable targeted optimization of the overall system using a consistent and vendor neutral interface across the different competing platforms. Operators can target higher performance with increased throughput for certain network deployments or maximum energy efficiency for other network deployments. Based on user workload demands and traffic patterns, operators can dynamically adjust processing resources to achieve optimum performance across different hardware platforms.

The proposed soft fabric processor may provide cost benefits the holistic approach may enable effective decoupling of hardware and software components, promoting vendor-neutral solutions across competing hardware architectures. This effective hardware and software separation may allow operators to potentially reduce costs by selecting components independently, leading to more competitive pricing.

The proposed soft fabric processor may enhance scalability. This may enable operators to adapt to changing network demands by mixing and matching components from different competing vendors. Operators may be able to perform this on demand in much less time. With the evolving network use cases and requirements, this holistic approach may enable efficient allocation and utilization of network resources.

The proposed soft fabric processor may enhance interoperability. Standardized interfaces across competing architectures and platforms may enable interoperability between components. This may promote faster innovation across a diverse ecosystem of O-RAN partners enabling them to bring their respective solutions to market more rapidly.

Although specific embodiments have been described above, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server, for instance, this may actually be a pair of servers (primary and failover), for redundancy.

Where this application refers to a "network entity", the skilled person would understand that the network entity may actually be provided by a plurality of servers that are geographically distributed.

An Open Radio Access Network as described above may be used to provide a cellular network serving one or more User Equipments, UEs. Examples of the UE include various fixed and mobile devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above examples are described in relation to specific radio access networks (e.g., 4G and 5G radio access networks), these methods, techniques, apparatuses, and systems may be applied to a variety of wireless multiple access systems. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems. Moreover, the technical features of the present invention may be applied to future iterations of multiple access systems defined in 3GPP standards, such as (but not limited to) 6G.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Any of the methods described herein may be implemented as computer software or a "computer program". The computer program may be configured to control a network entity (e.g., a server or group of servers) to perform any method according to the disclosure. A network entity (e.g., a server or group of servers) within a cellular network may also be provided, configured to operate in accordance with certain methods disclosed herein. For example, the network entity may include a processor and at least one communication interface, particularly comprising one or both of a transmitter and receiver.

A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EPROM, EEPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a network entity, a server or a cell) means "one or more" (for instance one or more UEs, one or more network entities, one or more servers, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

**Claims**

1.  A method of managing resources in a network function of an Open Radio Access Network, Open RAN, the method comprising:

    dynamically identifying a plurality of hardware resources available to the network function, wherein each hardware resource supports one or more processing capabilities;
    facilitating a plurality of application processes by:

    dynamically allocating hardware resources from the plurality of hardware resources to the plurality of application processes, based on one or more processing requirements of each of the plurality of application processes and the processing capabilities of each hardware resource; and
    communicating instructions and data between each of the plurality of application processes and the hardware resources allocated to the respective application process.

2.  The method of claim 1, wherein dynamically identifying the plurality of hardware resources comprises discovering the plurality of hardware resources and querying each of the hardware resources to determine the respective processing capabilities of each hardware resource.

3.  The method of claim 1 or claim 2, wherein the plurality of hardware resources comprises one or more:

    RAN processing units;
    compute kernels;
    memory units;
    Central Processing Units, CPUs;
    CPU cores;
    Digital Signal Processors, DSPs;
    Field Programmable Gate Arrays, FGPAs;
    Application-Specific-Integrated-Circuits, ASICs;
    Graphics Processing Units, GPUs; and/or
    accelerators.

4.  The method of any preceding claim, wherein the processing capabilities comprise one or more of:

    an instruction set of the hardware resource;
    signal processing capabilities of the of the hardware resource;
    packet processing capabilities of the of the hardware resource;
    one or more communications protocols for which processing capabilities are supported; and
    one or more technology standards for which processing capabilities are supported.

5.  The method of any preceding claim, further comprising:
    receiving, from each of the plurality of application processes, a request for hardware resources, wherein the request comprises an indication of the processing requirements of the respective application process.

**6.** The method of any preceding claim, further comprising:
dynamically configuring hardware resources from the plurality of hardware resources, based on the one or more processing capabilities of the respective hardware resource and the one or more processing requirements of one or more application processes to which the hardware resource has been allocated.

**7.** The method of any preceding claim, wherein each hardware resource supports one or more power management capabilities, wherein the method further comprises:

receiving, from each of the plurality of application processes, power management instructions; and implementing the power management instructions by controlling one or more of the hardware resources allocated to the respective application process, based on the power management capabilities of the respective hardware resource, to:

operate in a power mode selected from a plurality of power modes defined by the power management capabilities of the hardware resource;
perform frequency scaling; and/or
perform voltage regulation.

**8.** The method of claim 7, wherein dynamically identifying the plurality of hardware resources further comprises querying each of the hardware resources to determine the respective power management capabilities of each hardware resource.

**9.** The method of claim 7 or claim 8, further comprising:

dynamically evaluating one or more power consumption and performance metrics; and
dynamically adjusting allocation of hardware resources to the plurality of application processes to implement the power management instructions.

**10.** The method of any preceding claim, further comprising:
defining an application-specific interface between each of the plurality of application processes and the hardware resources allocated to the respective application process, wherein communicating instructions and data between the application process and the allocated hardware resources comprises communicating the instructions and data via the application-specific interface.

**11.** The method of claim 10, wherein communicating instructions and data via the application-specific interface comprises:

communicating instructions and data with the application process via the application-specific interface;
translating the instructions and data, based on the application-specific interface defined for the application process; and
communicating instructions and data with the plurality of hardware resources via one or more underlying physical interfaces.

**12.** The method of claim 11, wherein the one or more underlying physical interfaces comprise one or more of:

PCIe;
OCP; and
ethernet.

**13.** A framework for managing resources in a network function of an Open Radio Access Network, Open RAN, the framework comprising:

a software-defined RAN controller, SDRC, configured to:

dynamically identify a plurality of hardware resources available to the network function, wherein each hardware resource supports one or more processing capabilities; and
dynamically allocate hardware resources from the plurality of hardware resources to a plurality of application processes, based on one or more processing requirements of each of the plurality of application processes

17

and the processing capabilities of each hardware resource; and

a RAN inter-process communication framework, RAN-IPC, configured to:

communicate instructions and data between each of the plurality of application processes and the hardware resources allocated to the respective application process.

14. The framework of claim 13, further comprising one or more of:

a RAN programming language defining a plurality of functions comprising signal and packet processing functions for a plurality of communications protocols and/or technology standards;
a RAN compiler configured to receive instructions in accordance with the RAN programming language and provide instructions to control each of the plurality of hardware resources, based on the processing capabilities of the respective hardware resource; and
a Hardware Abstraction Layer, HAL, configured to communicate instructions and data between the SDRC and the plurality of hardware resources via one or more underlying physical interfaces.

15. A computer program comprising instructions that, when executed on a processor, cause the processor to perform the method of any of claims 1 to 12.

100

140

150

| 151 | 152 | 153 |

160

| 161 | 162 |

130

110

120A

121 122 123 124 125

...

120N

Fig. 1

Core Network

Core Network

**Traditional RAN
Single Vendor**

**Open RAN**

**Baseband Unit
(BBU)**

**Multiple Vendors**

RIC

**O-RAN Central Unit
(O-CU)**

Fronthaul

**Multiple Vendors**

**Radio Unit
(RU)**

**O-RAN Distributed Unit
(O-DU)**

Open Fronthaul

**Multiple Vendors**

**O-RAN Radio Unit
(O-RU)**

Fig. 2

# O-RAN DU/CU

O-DU/O-CU Virtual RAN/vRAN/OpenRAN Application

Container Engine and Virtualization middleware

## Soft Fabric Processor (SFP)

| RAN Programming Language (RPL) | SW Defined RAN Controller (SDRC) |

RAN Inter process Communication (RAN-IPC) Framework

Interface Definitions (abstract RAN compute interfaces)

Hardware Abstraction Layer (HAL)

OS Layer and HW drivers

Compute kernels/RAN Processing Units (RPUs)

| CPU | DSP | FPGA | ASIC |

Fig. 3

Fig. 4

**EUROPEAN SEARCH REPORT**

Application Number

EP 24 38 6064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/091664 A1 (INTEL CORP [US]) 25 May 2023 (2023-05-25) * paragraphs [0014] - [0017], [0031], [0040], [0045], [0051] - [0057], [0060], [0063], [0066], [0067], [0077] - [0082], [0114], [0178]; claims 16-18 * * paragraphs [0217] - [0221], [0238], [0269], [0389], [0496] * | 1-15 | INV. G06F9/50 |
| X | US 2021/117242 A1 (VAN DE GROENENDAAL JOHAN [US] ET AL) 22 April 2021 (2021-04-22) * paragraphs [0091], [0092], [0098] - [0102], [0109] - [0112], [0157], [0158], [0177], [0180], [0182], [0187], [0190] * * paragraphs [0196], [0198], [0248], [0251], [0256], [0305], [0309] - [0315] * | 1-15 | |

TECHNICAL FIELDS
SEARCHED      (IPC)

G06F

The present search report has been drawn up for all claims

| Place of search | Date of completion of the search | Examiner |
|---|---|---|
| The Hague | 10 December 2024 | Buzgan, C |

## ANNEX TO THE EUROPEAN SEARCH REPORT
## ON EUROPEAN PATENT APPLICATION NO.

EP 24 38 6064

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | | Publication date |
|---|---|---|---|---|
| WO 2023091664 A1 | 25-05-2023 | CN | 117897980 A | 16-04-2024 |
| | | EP | 4434252 A1 | 25-09-2024 |
| | | US | 2024259879 A1 | 01-08-2024 |
| | | WO | 2023091664 A1 | 25-05-2023 |
| US 2021117242 A1 | 22-04-2021 | CN | 116018795 A | 25-04-2023 |
| | | DE | 102021122880 A1 | 07-04-2022 |
| | | FR | 3117641 A1 | 17-06-2022 |
| | | NL | 2029116 A | 02-06-2022 |
| | | US | 2021117242 A1 | 22-04-2021 |
| | | US | 2021117249 A1 | 22-04-2021 |
| | | WO | 2022072096 A1 | 07-04-2022 |

EPO FORM P0459

For more details about this annex : see Official Journal of the European Patent Office, No. 12/82

**EP 4 657 255 A1**

**Patent documents cited in the description**

- US 2023318904 A1